# EUROPÄISCHE PATENTSCHRIFT

(11) **EP 1 318 925 B1**
(45) Veröffentlichungstag und Bekanntmachung des Hinweises auf die Patenterteilung: **16.06.2004**
(21) Anmeldenummer: 01969706.9
(22) Anmeldetag: 10.09.2001
(51) Int. Cl.: B60K 6/04, B60K 17/02

(54) **ANTRIEBSVORRICHTUNG, INSBESONDERE FÜR EIN KRAFTFAHRZEUG**
DRIVE DEVICE, ESPECIALLY FOR A MOTOR VEHICLE
DISPOSITIF D'ENTRAINEMENT, NOTAMMENT POUR UN VEHICULE AUTOMOBILE

(30) Priorität: 22.09.2000 EP 00120779
(43) Veröffentlichungstag der Anmeldung: 18.06.2003
(73) Patentinhaber: SIEMENS AKTIENGESELLSCHAFT, 80333 München (DE)
(72) Erfinder: DEHRMANN, Uwe, 97076 Würzburg (DE)
(86) Internationale Anmeldenummer: PCT/EP2001/010441
(87) Internationale Veröffentlichungsnummer: WO 2002/026513

(56) Entgegenhaltungen:
- EP-A- 0 749 861
- DE-A- 3 016 620
- DE-A- 3 827 249
- DE-A- 4 007 424
- US-A- 5 234 278
- US-A- 5 855 148

## Beschreibung

Die Erfindung bezieht sich auf eine Antriebsvorrichtung gemäß Patentanspruch 1.

Ein Kraftfahrzeug, das zumindest während begrenzter Zeitabschnitte wahlweise mit rein verbrennungsmotorischem, mit rein elektromotorischem oder gleichzeitig mit verbrennungs- und elektromotorischem Antrieb betreibbar ist, ist z.B. aus der DE 43 23 601 Al bekannt; die elektrische Maschine kann auch als Generator in Form einer elektrischen Bremse arbeiten und eine elektrisch Fahrzeugbatterie laden oder aus dieser gespeist als Starter für die Verbrennungsmaschine eingesetzt werden.

Die elektrische Maschine und die Verbrennungsmaschine arbeiten auf eine gemeinsame, im vorgenannten bekannten Fall zu einem Schaltgetriebe führende Abtriebswelle; soll anstelle eines Schaltgetriebes ein Automatik-Getriebe mit axial einem Getriebeteil vorgeschaltetem Drehmomentwandler eingesetzt werden, so ist es bei üblicher, nur durch Verbrennungsmaschinen angetriebenen Fahrzeugen bekannt, zum Ausgleich von axialen Pumpbelastungsbewegungen durch den Drehmomentwandler die Verbrennungsmaschine über ein, sich im wesentlichen radial zu deren Kurbelwelle erstreckendes, axial elastisches Verbindungselement, insbesondere eine sogenannte Flexscheibe, an die Antriebsseite des Drehmomentwandlers des AutomatikGetriebes anzukoppeln. Das Verbindungselement, insbesondere die Flexscheibe, ist dabei üblicherweise mit ihrem radial äußeren Ende, vorzugsweise über Schraubverbindungen, an den Drehmomentwandler angekoppelt.

Durch die gattungsbildende US 5 103 127 A ist eine Kraftfahrzeug- Antriebsvorrichtung mit einem über eine Flexscheibe mit der Abtriebswelle einer Verbrennungsmaschine in Drehmitnahme stehenden Wandlerdeckel eines Drehmomentwandlers eines Automatikgetriebe sowie einem den Drehmomentwandler radial umfassenden Starter-Generator mit ringförmigem Innenrotor bekannt, wobei die Drehmitnahme im Freiraum radial innerhalb des Innenrotor-Ringes angeordnet ist.

Durch die DE 30 166 20 A ist eine Kraftfahrzeug-Antriebsvorrichtung mit einer an eine Verbrennungsmaschine über eine Strömungskupplung ankoppelbaren, als Motor oder Generator betreibbaren elektrischen Maschine in Scheibenläufer-Bauart mit axial stirnseitig an der Verbrennungsmaschine abgewandtem Pumpenrad der Strömungskupplung gehaltenem Rotor bekannt.

Gemäß Aufgabe vorliegender Erfindung soll eine einfach herstell- und insbesondere montierbare, axial kurzbauende Antriebsvorrichtung der Hybrid-Art mit einer auf ein Automatik-Getriebe mit Drehmomentenwandler arbeitende Verbrennungsmaschine und einer elektrischen Maschine, insbesondere einem Starter-Generator, geschaffen werden.

Die Lösung dieser Aufgabe gelingt durch eine Antriebsvorrichtung gemäß Patentanspruch 1; vorteilhafte Augestaltungen der Erfindung sind Gegenstand der Unteransprüche.

Durch die Anordnung des Starter-Generators an der dem Verbrennungsmotor und dem elastischen Verbindungselement, insbesondere der Flexscheibe, axial abgewandten Seite, d.h. der dem Getriebeteil zugewandten Seite des Drehmomentwandlers ist einerseits der Montagezugang zur Drehmitnahme-Verbindung zwischen dem axial elastischen Verbindungselement einerseits und dem Drehmomentwandler andererseits auch bei kürzerem axialen Einbauraum hinreichend gewährleistet und kann andererseits der aufgrund der Außenmaße der Verbrennungsmaschine und des Drehmomentwandlers vorgegebene radiale Einbauraum voll von dem Starter-Generator genutzt werden, der zur Erreichung einer vorgegebenen Leistung entsprechend axial kurzbauend ausgelegt werden kann. In für eine den radialen Einbauraum voll ausnutzenden und dadurch die axiale Baulänge verkürzenden vorteilhafter Weise ist nach einer Ausgestaltung eine das Getriebeteil mit der Verbrennungsmaschine verbindende, den Drehmomentwandler übergreifende Getriebegehäuse-Glocke bzw. Wandler-Glocke unmittelbar zur Halterung des Stators einer als Innenläufermotor vorgesehenen elektrischen Maschine vorgesehen.

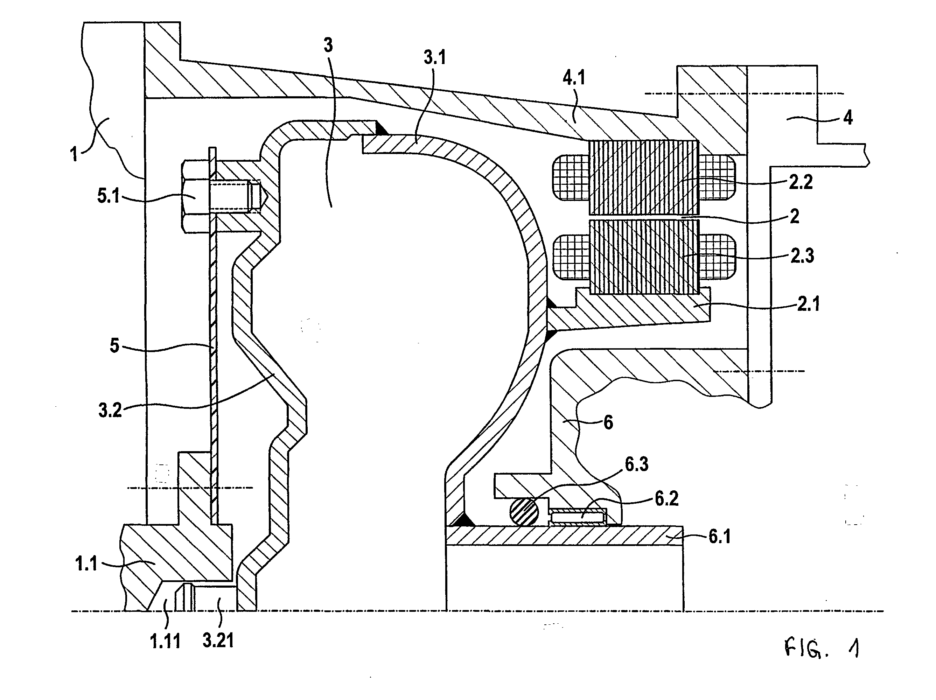

Die Erfindung sowie weitere vorteilhafte Ausgestaltungen der Erfindung gemäß Merkmalen der Unteransprüche sind im folgenden anhand eines in der Figur schematisch dargestellten Ausführungsbeispiels erläutert.

Ein in seinem inneren Aufbau an sich z.B. durch die Zeitschrift ATZ 88 (1966) 2, Seiten 81-83 oder VDI-Berichte Nr. 1175, 1995, Seiten 281, 282 bekannter Drehmomentwandler 3 ist axial zwischen einer Verbrennungsmaschine 1 einerseits und einem Starter-Generator 2 andererseits angeordnet. Die Kurbelwelle 1.1 der Verbrennungsmaschine 1 steht in Drehmitnahme mit dem radial inneren Ende eines axial elastischen Verbindungselementes 5, insbesondere einer sogenannten Flexscheibe, dass seinerseits mit seinem radial äußeren Ende über eine axial zu montierende Schraubverbindung 5.1 mit dem der Verbrennungsmaschine 1 axial benachbarten Wandlerdeckel 3.2 des Drehmomentwandlers 3 in Drehmitnahme verbunden ist; der Wandlerdeckel 3.2 ist, z.B. über eine Schweißverbindung in Drehmitnahme mit der dem Starter-Generator 2 axial benachbarten antriebsseitigen Pumpenschale 3.1 des Drehmomentwandlers 3 verbunden. An dieser antriebsseitigen Pumpenschale 3.1 ist der Rotor 2.3 mit seiner Rotorwelle in Form eines Rotorhalters 2.1 als fliegende Lagerung befestigt und somit über den Wandlerdeckel 3.2 in Drehmitnahme mit der Kurbelwelle 1.1 der Verbrennungsmaschine 1 gestellt. Der Wandlerdeckel 3.2 greift mit einem Zentrierzapfen 3.21 in eine Zentrieraufnahme 1.11 der Kurbelwelle 1.1. Radial unterhalb des Rotors 2.3 ist unter vorteilhafter Ausnutzung des zur Verfügung stehenden Einbauraumes das Pumpengehäuse 6 des Drehmomentwandlers 3 mit einem Pumpenlager 6.2 und einer Pumpendichtung 6.3 zu einer Pumpennabe 6.1 vorgesehen.

Der axial außen an der dem Drehmomentwandler 3 abgewandten Seite des Starter-Generators 2 angeordnete Getriebeteil 4 des Automatikgetriebes 3;4 ist über eine den Starter-Generator 2 und den Drehmomentwandler 3 übergreifende Getriebegehäuse-Glocke 4.1 bzw. Wandler-Glocke mit der Verbrennungsmaschine 1 verbunden. In für einen einfachen und platzsparenden Einbau vorteilhafter Weise ist die Getriebegehäuse-Glocke 4.1 bzw. Wandler-Glocke im Sinne eines unmittelbaren Halters für den Statorteil 2.2 des Starter-Generators 2 ausgebildet.

Die erfindungsgemäße Antriebsvorrichtung kann wie folgt zusammengefasst werden: Zum einfachen und insbesondere axial kompakten Zusammenbau einer Antriebsvorrichtung mit einer Verbrennungsmaschine 1 und einem Starter-Generator 2 sowie einem abtriebsseitigen Automatik-Getriebe 3;4 mit vorgeschaltetem, über eine Flexplatte 5 mit der Kurbelwelle 1.1 der Verbrennungsmaschine 1 verbundenem Drehmomentwandler 3 ist der Starter-Generator 2 an der der Verbrennungsmaschine 1 abgewandten axialen Seite des Drehmomentenwandlers 3 angeordnet.

## Patentansprüche

1. Antriebsvorrichtung, insbesondere für ein Kraftfahrzeug
- mit einer Verbrennungsmaschine (1) mit einer Abtriebswelle (1.1), vorzugsweise einer Kurbelwelle;
- mit einem abtriebsseitigen Automatikgetriebe (3;4) mit einem Getriebeteil (4) und einem Drehmomentwandler (3);
- mit einem mit seinem Rotor (2.3) an die Abtriebswelle (1.1) der Verbrennungsmaschine (1) koppelbaren Starter-Generator (2), insbesondere in Form einer Asynchronmaschine, an der der Verbrennungsmaschine (1) axial abgewandten Seite des Drehmomentwandlers (3);
- mit einer Drehmitnahme zwischen einem antriebsseitigen Wandlerdeckel (3.1) des Drehmomentwandlers (3) einerseits und der Abtriebswelle (1.1) der Verbrennungsmaschine (1) andererseits über ein axial elastisches Verbindungselement (5), insbesondere eine sich radial erstreckende Flexscheibe, an der der Verbrennungsmaschine (1) axial zugewandten Seite des Drehmomentwandlers (3), **gekennzeichnet durch**
- eine Drehmitnahme zwischen dem Rotor (2.3) und einer antriebsseitigen Pumpenschale (3.1) des Drehmomentwandlers (3) an dessen der Verbrennungsmaschine (1) axial abgewandten Stirnseite;
- eine axiale Erstreckung des Starter-Generators (2) zwischen dem Drehmomentwandler (3) und dem Getriebeteil (4) und eine radiale Erstreckung des Starter-Generators (2), insbesondere seines Stators (2.2), bei einem Innenläufer-Elektromotor bis in den Bereich der Drehmitnahme zwischen dem elastischen Verbindungselement (5), insbesondere der Flexscheibe, und dem Drehmomentwandler (3).

2. Antriebsvorrichtung nach Anspruch 1
- mit einer Drehmitnahme zwischen dem Drehmomentwandler (3) und dem elastischen Verbindungselement (5), insbesondere der Flexscheibe, in dessen radial äußerem Endbereich.

3. Antriebsvorrichtung nach Anspruch 1 und/oder 2
- mit einer Halterung des Getriebeteils (4) des AutomatikGetriebes (3; 4) an der Verbrennungsmaschine (1) mittels einer den Starter-Generator (2) und den Drehmomentwandler (3) radial und axial übergreifenden Getriebegehäuse-Glocke.

4. Antriebsvorrichtung nach Anspruch 3
- mit einer Ausbildung der Getriebegehäuse-Glocke im Sinne eines Statorhalters zur unmittelbaren Aufnahme des Stators (2.2) des Starter-Generators (2).

## Claims

1. Drive mechanism, in particular for a motor vehicle
- having an internal combustion engine (1) with a driven shaft (1.1), preferably a crankshaft;
- having an output-side automatic transmission (3;4) with a transmission section (4) and a torque converter (3);
- having, on the side of the torque converter (3) facing axially away from the internal combustion engine (1), a starter/generator (2), in particular in the form of an asynchronous machine, which can be connected by its rotor (2.3) to the driven shaft (1.1) of the internal combustion engine (1);
- having a rotationally fixed coupling between an input-side cover (3.1) of the torque converter (3) on the one hand and the driven shaft (1.1) of the internal combustion engine (1) on the other hand via an axially elastic connecting element (5), in particular a radially elongated flex plate, on the side of the torque converter (3) facing axially towards the internal combustion engine (1), **characterized by**
- a rotationally fixed coupling between the rotor (2.3) and an input-side pump bowl (3.1) of the torque converter (3) on its end face facing axially away from the internal combustion engine (1);
- an axial elongation of the starter/generator (2) between the torque converter (3) and the transmission section (4), and a radial elongation of the starter/generator (2), in particular of its stator (2.2), extending in the case of an internal rotor electric motor into the area of the rotationally fixed coupling between the elastic connecting element (5), in particular the flex plate, and the torque converter (3).

2. Drive mechanism according to Claim 1
- having a rotationally fixed coupling between the torque converter (3) and the elastic connecting element (5), in particular the flex plate, in its radially outer end region.

3. Drive mechanism according to Claim 1 and/or 2
- having the transmission section (4) of the automatic transmission (3;4) supported on the internal combustion engine (1) by means of a transmission housing cover radially and axially covering the torque converter (3).

4. Drive mechanism according to 3
- having a transmission housing cover embodied as a stator holder for direct accommodation of the stator (2.2) of the starter/generator (2).

## Revendications

1. Dispositif d'entraînement, en particulier pour un véhicule automobile,
- comportant une machine à combustion interne (1) comportant un arbre d'entraînement (1.1), de préférence un vilebrequin;
- comportant, côté entraînement, une boîte de vitesse automatique (3; 4), avec une partie d'entraînement (4) et un convertisseur de couple (3),
- comportant un démarreur-générateur (2), en particulier sous la forme d'une machine asynchrone, pouvant être couplé, avec son rotor (2.3), à l'arbre d'entraînement (1.1) de la machine à combustion interne (1), sur la face du convertisseur de couple (3) opposée axialement à la machine à combustion interne (1);
- comportant un entraînement de rotation entre, d'un côté, un couvercle (3.1) de convertisseur, côté entraînement, du convertisseur de couple (3) et, de l'autre côté, l'arbre de sortie d'entraînement (1.1) dé la machine à combustion interne (1) par l'intermédiaire d'un élément de liaison (5) élastique axialement, en particulier un disque flexible s'étendant radialement, contre la face du convertisseur de couple (3), tournée axialement vers la machine à combustion interne (1),
**caractérisé par**:
- un entraînement de rotation entre le rotor (2.3) et une coquille de pompe (3.1), côté entraînement, du convertisseur de couple (3), sur sa face frontale opposée axialement à la machine à combustion interne (1);
- une extension axiale du démarreur-générateur (2) entre le convertisseur de couple (3) et la partie d'entraînement (4) et une extension radiale du démarreur-générateur (2), en particulier de son stator (2.2), dans le cas d'un moteur électrique à rotation interne, jusque dans la zone de l'entraînement en rotation, entre l'élément de liaison (5) élastique axialement, en particulier le disque flexible, et le convertisseur de couple (3).

2. Dispositif d'entraînement suivant la revendication 1,
- comportant un entraînement en rotation entre le convertisseur de couple (3) et l'élément de liaison élastique (5), en particulier le disque flexible, dans sa zone de son extrémité extérieure radialement.

3. Dispositif d'entraînement suivant la revendication 1 et/ou 2,
- comportant une pièce de maintien de la partie (4) d'entraînement de la boîte de vitesse automatique (3; 4) sur la machine à combustion interne (1), au moyen d'une cloche de carter de boîte de vitesse enveloppant axialement et radialement le démarreur-générateur (2) et le convertisseur de couple (3).

4. Dispositif d'entraînement suivant la revendication 3,
- comportant une forme d'exécution de la cloche du carter de la boîte de vitesse, pour former un support de stator destiné à recevoir directement le stator (2.2) du démarreur-générateur (2).
